# EUROPÄISCHE PATENTANMELDUNG

(11) **EP 1 909 208 A1**
(43) Veröffentlichungstag der Anmeldung: **09.04.2008**
(21) Anmeldenummer: 07019425.3
(22) Anmeldetag: 04.10.2007
(51) Int. Cl.: G06F 19/00

(54) **Vorrichtung und Verfahren zum zentralen steuern von miteinander verbundenen Medizingeräten**

(30) Priorität: 05.10.2006 DE 102006047218
(71) Anmelder: Hippokratec Gesellschaft für Medizintechnik mbh, 83714 Miesbach (DE)
(72) Erfinder: Czupor, Norbert, 83043 Bad Aibling (DE); Meyer, Edgar, 83714 Miesbach (DE)
(74) Vertreter: Bösl, Raphael Konrad

(57) **Zusammenfassung**

Die Erfindung betrifft ein Verfahren zum Steuern mindestens einer als medizinisches Gerät ausgeführte Slave-Einrichtung mittels einer Master-Einrichtung, die mit der Slave-Einrichtung verbunden ist, mit den Schritten: Vorsehen einer Slave-Einrichtung, in der mindestens ein Darstellungsobjekt gespeichert ist und Übertragen des mindestens einen Darstellungsobjekts der Slave-Einrichtung an die Master-Einrichtung. Ferner betrifft die Erfindung eine Slave-Einrichtung, die eingerichtet ist, Daten an eine Master-Einrichtung zu senden, und in einem Speicher mindestens ein Darstellungsobjekt gespeichert ist, und die Slave-Einrichtung das mindestens eine Darstellungsobjekt an die Master-Einrichtung zu senden. Zudem betrifft die Erfindung eine entsprechende Master-Einrichtung, die eingerichtet ist, Daten von einer als medizinisches Gerät ausgeführten Slave-Einrichtung zu empfangen, wobei die Master-Einrichtung ein Darstellungsobjekt empfangen kann, das von der Slave-Einrichtung ist gesendet wird.

## Beschreibung

### Technisches Gebiet

Die vorliegende Erfindung betrifft Vorrichtung und Verfahren zum zentralen Steuern von miteinander verbundenen Medizingeräten. Insbesondere betrifft die Erfindung ein Verfahren, eine Slave-Einrichtung, eine Master-Einrichtung und ein Steuerungssystem zur Vernetzung und interaktiven Steuerung von Slave-Einrichtungen durch eine Master-Einrichtung.

### Stand der Technik

Auf vielen medizinischen Gebieten, beispielsweise in der operativen Medizin und der Intensivpflege, kommen mehrere Geräte pro Patient zum Einsatz. Die Betriebsparameter dieser Geräte werden für jedes Gerät an dem jeweiligen Bedienfeld des Geräts eingestellt. Um die Steuerung zu vereinfachen und die Anzahl der notwendigen Kabel zu verringern, werden mehrere Geräte mit einem Master verbunden, mit dem die Geräte, z.B. direkt aus dem Sterilbereich heraus, bedient und gesteuert werden können.

Die Druckschrift DE 101 51 118 A1 beschreibt ein Verfahren zum Übertragen von Rohdaten zur Beobachtung und Bedienung von Feldgeräten. Das Verfahren sieht vor, HTML-Daten, die Darstellungsdaten des Feldgeräts umfassen, über ein IP-basiertes Protokoll zu übertragen. Die Übertragung findet über das Intranet statt und betrifft den Datenaustausch zwischen mehreren Nutzereinrichtungen und technischen Produktionsmitteln innerhalb von großtechnischen Anlagen oder innerhalb von Umspannwerken. Die Druckschrift betrifft somit kein medizinisches Gebiet.

In einem System, das von der KARL STORZ GmbH & Co. KG vertrieben wird, werden alle angeschlossenen Medizingeräte mit einer zentralen Steuereinheit verbunden, mit der die einzelnen angeschlossenen Geräte gesteuert werden können, beispielsweise über Touchscreen. Das Komfortsystem des SCB® - STORZ Communication Bus System stellt die realen Bedienfelder der einzelnen angeschlossenen Geräte auf einem Touchscreen dar.

Das SIOS®-System von der Siemens AG sieht ebenfalls eine zentrale Bedienmöglichkeit für mehrere vernetzte Medizingeräte vor. In diesem System zeigt ein Menümonitor die Bedienmenüs einer angewählten Bedienkomponente, wobei das Menü für alle Geräte einheitlich gestaltet wurde, unabhängig von dem jeweiligen äußeren Erscheinungsbild des Bedienfelds des individuellen Geräts.

Beide Systeme sind für die Integration mehrerer unterschiedlicher, zum Teil von verschiedenen Herstellern stammenden Medizingeräten eingerichtet. Diese müssen dem System vorab bekannt sein. Weiterhin müssen die Schnittstellen der angeschlossenen Geräte kompatibel zu einem proprietären Protokoll sein, d.h. kompatibel zum Storz-Communication Bus (KARL STORZ GmbH) oder zum SIOS-Protokoll (Siemens) sein. Zum Anschluss eines weiteren Geräts muss dieses nicht nur eine kompatible Schnittstelle aufweisen, sondern auch mit sämtlichen Bedieneigenschaften an der Zentralsteuerung angemeldet sein. Wenn daher ein neues Gerät angeschlossen werden soll, so muss die Zentralsteuerung aktualisiert werden, so dass die Zentralsteuerung das neue Gerät mit sämtlichen Bedienmöglichkeiten und im Falle des SCB® - Communication Bus Systems mit seinem äußeren Erscheinungsbild in das Menu aufnehmen und am Touchscreen darstellen kann. Eine solche Aktualisierung wird gemäß dem Stand der Technik durch Einspeisen der neuen Gerätedaten in die Zentralsteuerung mittels einer externen Datenquelle von Wartungspersonal vorgenommen. Das neue Gerät wird daraufhin von der Zentralsteuerung erkannt und die in der Zentralsteuerung gespeicherten neuen Gerätedaten werden in das zentrale Bedienmenu aufgenommen.

Dies schränkt die Flexibilität hinsichtlich neuer Geräte ein und führt bei jedem neuen Gerät zu einem Aktualisierungsprozess, der von Wartungspersonal durchgeführt werden muss. Ferner kann ein fehlerhafter Aktualisierungsprozess zu Bedienfehlern und so zu Fehlfunktionen führen.

Es ist daher eine Aufgabe der Erfindung, ein Steuerungskonzept vorzusehen, das einen geringeren Aufwand beim Anschließen eines neuen Geräts an eine Zentralsteuerung mit sich bringt.

### Erfindungsgemäße Lösung

Diese Aufgabe wird gelöst durch das Verfahren nach Anspruch 1, die als medizinisches Gerät ausgeführte Slave-Einrichtung nach Anspruch 8, der Master-Einrichtung nach Anspruch 11 und das Steuerungssystem nach Anspruch 15.

Das der Erfindung zugrunde liegende Konzept ist es, die wie auch immer umgesetzte Übertragung der zur Fernsteuerung einer als medizinisches Gerät ausgeführte Slave-Einrichtung erforderlichen Parameter, d.h. Geräteeigenschaften, an eine oder mehrere zentrale Steuerstellen bzw. Master zu senden, um die Manipulation bzw. Darstellung der bis zu diesem Zeitpunkt dem Master unbekannten Geräte bzw. Slave-Einrichtung über eine gewisse räumliche Distanz zu ermöglichen.

Dies erfolgt beispielsweise durch Übertragung einer Grafik mit darin eingebetteten Funktions-und Anzeigeelementen, welche die fernsteuerbaren, bzw. fernablesbaren Daten und damit die Geräteeigenschaften der Slave-Einrichtung umfassen.

Verfügt ein medizinisches Gerät bzw. eine Slave-Einrichtung über keine Grafikdaten, so kann es seine Parameter alternativ in einem anderen Format, beispielsweise in einem numerischen Format oder Textformat an den Master senden. Die Master-Einrichtung, die erfindungsgemäß über die Fähigkeit verfügt, neue d.h. bis dato ihm unbekannte Slave-Einrichtungen dynamisch zu adaptieren, d.h. deren Eigenschaften und Fähigkeiten zu "lernen", so dass zumindest ein Teil der Slave-Funktionen an der Master-Einrichtung wiedergegeben werden, kann die Steuersignale bzw. Anzeigedaten alternativ in Text-, Bild- oder Audiosignalen aufbereiten und handhaben.

Daher soll innerhalb der Beschreibung und der Ansprüche der Begriff "Darstellungsobjekt" anzeigbare Daten betreffen, beispielsweise numerische Daten, Parameterangaben in Textformat, Bildgraphiken und Kombinationen hiervon. In diesem Sinne kann ein Betätigungselement oder ein Wiedergabeelement eine Bildgraphik, ein im textbasierten oder numerischen Format wiedergegebene Parameterangabe, die einen Zustand der Slave-Einrichtung angibt, oder eine Kombination hiervon sein. Insbesondere wird zur Umsetzung eines Betätigungselements eine höhere Sprache verwendet, beispielsweise HTML, XML oder SVG.

Im allgemeinen ist das Wiedergabeelement nicht auf eine Bildgraphik beschränkt, sondern kann Informationen umfassen, die Geräteeigenschaften wahrnehmbar, d.h. optisch bzw. sichtbar, haptil oder akustisch darstellen, beispielsweise ein als Ziffernkombination dargestellter Zahlenwert.

Ferner umfasst eine Ausführung der Erfindung den Ausschluss eines Geräts, wenn es keine verwertbaren Daten, d.h. am Master darstellbare Daten, von sich übermittelt. Zudem kann ein Gerät von der Kommunikation ausgeschlossen werden, wenn es sich nicht gemäß vorgegebenen Protokollregeln anmeldet.

Das erfinderische Konzept sieht zur Vereinfachung des Aktualisierungsprozesses vor, die zur Aktualisierung benötigten Daten in dem anzuschließenden Gerät zu speichern, um diese an die Zentralsteuerung zu übertragen, anstatt die Zentralsteuerung mit externen Datenquellen zu aktualisieren. Auf diese Weise kann die Aktualisierung automatisch ausgeführt werden und somit der Wartungsaufwand und die mit der Wartung verbundene Gefahr einer fehlerhaften Aktualisierung verringert werden. Ferner sind die neuen Geräte nicht an einen protokollbedingt beschränkten Satz an Bedienelementen gebunden, der sich aus den vorbestimmten Menüelementen des Zentralrechners bestimmt. Vielmehr ist die gesamte Bedienlogik sowie deren Darstellung in den angeschlossenen Geräten gespeichert und somit nicht auf die Elemente des vorprogrammierten Zentralsteuerungsmenüs beschränkt. Gemäß eines Aspekts der Erfindung sind die gesamten zur Bedienung und zentralen Darstellung des Geräts notwendigen Informationen dezentral in den anzuschließenden Geräten gespeichert, wohingegen die Zentralsteuerung lediglich die zur Darstellung und zentralen Bedienung und Steuerung notwendigen Funktionen ausführt. Mit anderen Worten werden die gerätespezifischen Informationen hinsichtlich des optischen Erscheinungsbildes, Bedienfunktionen und Anzeigen von den einzelnen Geräten in das Steuersystem eingebracht. Auf diese Weise kann eine, beispielsweise vom jeweiligen Hersteller des Gerätes definierte, vollständige graphische Benutzeroberfläche (graphical user interface, GUI) eines als Slave-Einrichtung arbeitenden medizinischen Geräts von diesem an die Zentralsteuerung, d.h. den Master, übertragen und dort angezeigt werden

Folglich sieht das erfindungsgemäße Verfahren das Übertragen eines Darstellungsobjektes von einer Slave-Einrichtung, in der ein Darstellungsobjekt gespeichert ist, an eine Master-Einrichtung vor. Als Slave-Einrichtung wird insbesondere das medizinische Gerät bezeichnet, welches an eine Master-Einrichtung bzw. an die Zentralsteuerung angeschlossen werden kann. Das Darstellungsobjekt umfasst vorzugsweise ein Datenobjekt oder eine Datei, das bzw. die zur Darstellung der Slave-Einrichtung durch die Master-Einrichtung dient. Das Darstellungsobjekt umfasst z.B. ein oder mehrere Wiedergabeobjekte, die das Äußere der Slave-Einrichtung wiedergeben.

Daher kann das Darstellungsobjekt eine photographische Wiedergabe sein, eine vektorbasierte Graphik sein, oder ein Parametersatz, mit dem der Umriss und die wichtigsten Details, beispielsweise ein Anzeigefeld oder Status-LEDs. Gemäß einer Ausführung der Erfindung umfasst das Darstellungsobjekt Parameter, die geometrischen Standardformen entsprechen, beispielsweise Rechtecke, Linien, Polygone und Kreise, wobei die Parameter die geometrische Standardform, deren Größe, Lage, Farbe, Umrandung, Beschriftung und/oder Textur angeben. Das Darstellungsobjekt kann ferner aus einem digitalen Code bestehen, der eine Wiedergabe eines Symbols, eines numerischen Werts, beispielsweise eines Betriebsparameters, oder kann eine ASCII-Zeichendarstellung sein. Zur Beschreibung eines solchen Darstellungsobjekts wird vorzugsweise eine Sprache verwendet, die Steuerbefehle umfasst, welche die genannten Eigenschaften bestimmen. Beispielsweise kann hierzu Hypertext wie HTML oder XML verwendet werden. Ferner kann der Hypertext die Verwendung von CSS-Formatvorlagen umfassen. Die photographische Wiedergabe umfasst die Verwendung von Rastergraphik-Dateien, die beispielsweise dem JPEG-, GIF-, Bitmap-, TIFF oder anderen gängigen Graphikstandard entsprechen. Als vektorbasierte Graphik eignet sich beispielsweise das CGM-Format.

Ferner sind Formate einsetzbar, die skalierbar sind, und/oder durch kein gewerbliches Schutzrecht geschützt sind, beispielsweise Freeware. Weitere Kriterien zur Auswahl des verwendeten Formats sind: gute Handhabbarkeit, geringer Speicherbedarf der fertigen Grafik, gute Komprimierbarkeit, beispielsweise durch einen Entropie-kodierenden Kompressionsalgorithmus, die Möglichkeit der Einbindung von Funktionselementen bzw. Objekten, usw.

Somit kann das äußere Erscheinungsbild von Medizingeräten und auch von anderen anschließbaren Geräten, beispielsweise Temperaturmessgeräte, Druckmessgeräte, Durchflussmessgeräte, usw. , wiedergeben werden. sowie deren Anzeigewerte, beispielsweise numerische Werte oder erfasste Bilder, an der Master-Einrichtung wiedergegeben und dargestellt werden.

Ein Darstellungsobjekt umfasst ein Wiedergabeobjekt und/oder ein Betätigungsobjekt. Diese Objekte können einzeln und in Kombination auftreten. Ein Wiedergabeobjekt kann Text, Symbole, geometrische Formen, Flächen, oder Bilder umfassen. Wiedergabeobjekte dienen zur Wiedergabe des Bedienfelds einer Slave-Einrichtung und betreffen unveränderliche Elemente wie Beschriftung und Form des Bedienfelds. Ferner betreffen Wiedergabeobjekte, die veränderlich sind, beispielsweise einen Messwert, der die Slave-Einrichtung anzeigt, eine Statusanzeige für den Betriebszustand oder eine graphische Darstellung, die mit einem Betätigungsobjekt verbunden ist und die sich beim Betätigen optisch ändert, beispielsweise ein umgelegter Schalter. Ein Darstellungsobjekt betrifft daher die äußere Erscheinung, die dem Benutzer wiedergegeben wird, und Elemente, die Benutzereingaben aufnehmen, die sich verarbeiten lassen und zur Steuerung der angeschlossenen zu steuernden Geräte, beispielsweise Medizingeräte, dienen. Somit bieten die an die Master-Einrichtung gesendeten Darstellungsobjekte den gleichen Grad an Interaktivität wie das entsprechende medizinische Gerät selbst.

Ein Betätigungselement hat die Eigenschaft, bei Betätigung, beispielsweise mittels Touch-screen, Spracheingabe, PC-Maus oder Fernbedienung, ein Eingabesignal zu erzeugen. Ferner kann ein Betätigungselement mit einer darstellbaren Graphik verknüpft sein, die beispielsweise die Position der des zu betätigenden Feldes, d.h. den sensitiven Bereich, kennzeichnet, und die von der Master-Einrichtung dargestellt werden kann. Das Betätigungselement arbeitet als Abfrageelement, das Benutzereingaben abfragt und dem mindestens ein Betriebsparameter der Slave-Einrichtung zugeordnet ist, so dass das bei Betätigung ein Eingabesignal an der Master-Einrichtung erzeugt wird, das einem bestimmten Betriebsparameter einer bestimmten, vorzugsweise der dargestellten, Slave-Einrichtung entspricht. Das Eingabesignal wird an die Slave-Einrichtung übermittelt, die den Betriebsparameter entsprechend der Eingabe verändert oder einstellt. Ein solcher Betriebsparameter ist beispielsweise eine physikalische Größe, d.h. ein Sollwert, der von der Slave-Einrichtung eingestellt wird. Der Betriebsparameter kann auch ein Betriebszustand sein, beispielsweise An, Aus, Bereit, Stand-By, Shut-off, passiver Betrieb, aktiver Betrieb usw. Abhängig von der Funktion der Slave-Einrichtung umfassen die einzustellenden physikalische Größen: Druck, Temperatur, Durchflussrate, Wirkstoffkonzentration, Strom, Spannung, Frequenz, Umdrehungsgeschwindigkeit, Feldstärke, Intensität und ähnliches. Im Allgemeinen können die Betriebsparameter von: Insuflatoren, Infusionsgeräten, Laser, HF-Chirurgiegeräte, Röntgenapparate, usw. Im allgemeinen eignen sich alle Geräte, die beispielsweise über einen Mikrocontroller gesteuert werden. Zur Aufnahme von Benutzeraktionen kann die Master-Einrichtung, die die Darstellungsobjekte wiedergibt, eine Eingabevorrichtung umfassen, die die Betätigung der Betätigungselemente erfasst und in entsprechende Signale umwandelt, die an die entsprechende Slave-Einrichtung übermittelt werden können, die die entsprechende Einstellung des jeweiligen Betriebsparameters vornimmt.

Das Darstellungsobjekt ist vorzugsweise als Datenblatt in der Slave-Einrichtung gespeichert, das klassifizierte Objekte in einem Objekt-Verzeichnis gruppiert. Diese Objekte umfassen vorzugsweise Informationen über den Typ und die Modellkennzeichnung des medizinischen Geräts der Slave-Einrichtung, über die Kompatibilität mit dem erfindungsgemäßen Verfahren und über die steuerbaren Betriebsparameter (beispielsweise einzustellender Druck, Durchlauf rate) beziehungsweise Ausgabevariablen (beispielsweise gemessene Temperatur oder Frequenz) der Slave-Einrichtung. Ferner ermittelt die Master-Einrichtungen Informationen über die Position der Slave-Einrichtung in der Ringtopologie des CAN-Busses und die Anzahl der baugleichen Slave-Einrichtungen, d.h. Slave-Einrichtungen mit der gleichen Modellkennzeichnung. Liegen diese Informationen vor, kann die Master-Einrichtung die angeschlossenen Slave-Einrichtungen anzeigen. Das Darstellungsobjekt umfasst vorzugsweise Informationen über die wesentlichen geometrischen Eigenschaften der Anzeige der darzustellenden Slave-Einrichtung und über das Verhalten von Betätigungselementen, wenn diese betätigt werden.

Erfindungsgemäß wird ein Betätigungselement, durch das ein Betriebsparameter gesteuert wird, so an der Master-Einrichtung dargestellt, wie es an dem Bedienfeld der Slave-Einrichtung für den Benutzer zu erkennen ist. Die Darstellung kann eine photographische Wiedergabe oder eine schemenhafte Darstellung sein, die die wesentlichen grafischen Eigenschaften des tatsächlichen Bedienfelds des Slave-Einrichtung wiedergibt.

Vorzugsweise entsprechen die durch das Darstellungsobjekt an der Master-Einrichtung wiedergegebenen Proportionen, Formen und Farben im wesentlichen dem Bedienfeld der Slave-Einrichtung. Eine wesentliche Eigenschaft der in der Slave-Einrichtung gespeicherten Darstellungsobjekte, die zur optischen Wiedergabe an der Master-Einrichtung vorgesehen sind, ist es, dass der Benutzer die Bedienelemente des an der Slave-Einrichtung vorgesehenen Bedienfeldes in der graphischen Wiedergabe der Master-Einrichtung wieder erkennt. Dadurch kann der Benutzer das gesamte System ohne zusätzliches Wissen bedienen, wenn er mit den Bedienfeldern der einzelnen angeschlossenen Geräte vertraut ist.

Ein grundlegender Aspekt der Erfindung liegt darin, dass die graphische Bedienoberfläche einer neu angeschlossenen Slave-Einrichtung an der Master-Einrichtung dargestellt werden kann, sobald die Slave-Einrichtung angeschlossen ist: Die darin gespeicherten Darstellungsobjekte können an die Master-Einrichtung gesendet werden, die zur Wiedergabe der wesentlichen Eigenschaften des Bedienfeldes der Slave-Einrichtung an der Master-Einrichtung notwendig sind. Dadurch kann die Master-Einrichtung ein zweites, virtuelles Bedienfeld wiedergeben. Auf diese Weise lässt sich eine neu angeschlossene Slave-Einrichtung sofort von der Master-Einrichtung aus so bedienen, wie es an dem Bedienfeld der Slave-Einrichtung selbst möglich ist. Somit können die Aktualisierung der an die Master-Einrichtung angeschlossenen Slave-Einrichtungen sowie deren Darstellung im Menü der Master-Einrichtung automatisch ausgeführt werden. Weder ist eine Aktualisierung per Hand notwendig, noch ein Umlernen auf die Menüführung der Master-Einrichtung.

Alternativ können auch Slave-Einrichtungen verwendet werden, an denen selbst kein Bedienfeld angebracht ist. Diese lassen sich dann nur über die Master-Einrichtung steuern, die das in der Slave-Einrichtung gespeicherte, virtuelle Bedienfeld wiedergibt.

Gemäß einer vorteilhaften Ausführung der Erfindung ist die Master-Einrichtung eingerichtet, die wesentlichen Anzeige- und Bedienelemente der angeschlossenen Slave-Einrichtungen graphisch darzustellen. In einer Ausführung umfasst die Master-Einrichtung eine Anzeigeeinheit, beispielsweise ein LCD-Display, und eine Graphik-Ansteuereinheit, die alle angeschlossenen Slave-Einrichtungen auf der Anzeigeeinheit darstellt. Davon sind bis auf eines alle Slave-Einrichtungen verkleinert dargestellt, um Platz für eine ausgewählte Slave-Einrichtung zu lassen. Diese ausgewählte Slave-Einrichtung ist deutlich größer als die anderen Slave-Einrichtungen dargestellt und kann, im Gegensatz zu den anderen, verkleinerten Slave-Einrichtungen bedient werden, beispielsweise mit einer PC-Maus. Zur Betätigung kann alternativ ein Touchscreen vorgesehen werden, der gleichzeitig die Funktion der Anzeigeeinheit übernimmt. In einer weiteren Ausführung wird zur Bedienung eine Fernsteuerung, eine autoklavierbare Handbedienung oder eine Sprachsteuerung verwendet. Die oben genannten Bedienvorrichtungen können auch in Kombination verwendet werden.

### Zeichnungen

Die Figur 1 zeigt eine Ausführung der Systemarchitektur, die eine erfindungsgemäße Master-Einrichtung mit erfindungsgemäßen Slave-Einrichtungen verbindet.

Die Figur 2 zeigt eine Slave-Einrichtung, die an der Master-Einrichtung graphisch wiedergegeben wird.

### Beschreibung beispielhafter Ausführungen

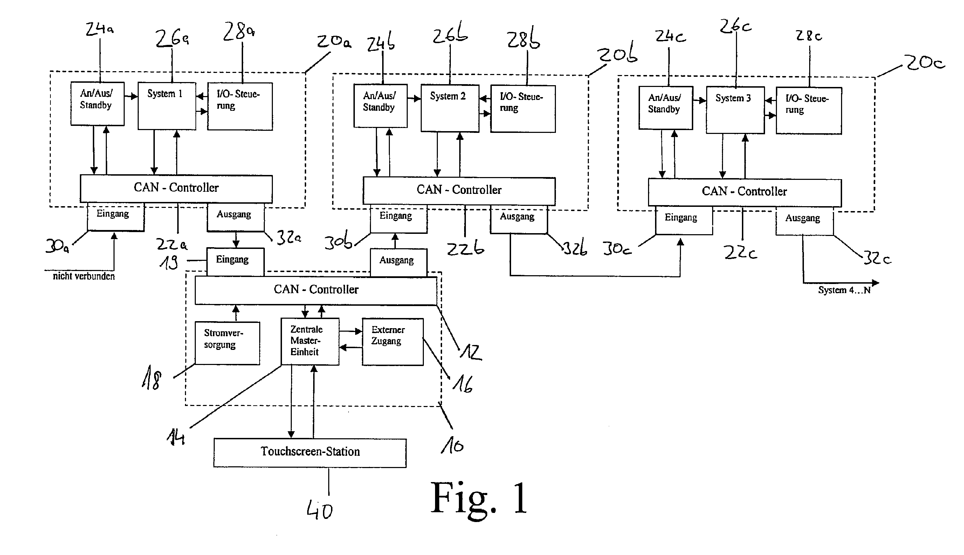

Die Figur 1 zeigt die Verbindung zwischen einer Master-Einrichtung 10 und Slave-Einrichtungen 20a-c anhand eines seriellen CAN-Busses. Die Slave-Einrichtungen 20a-c sind seriell miteinander über einen CAN-Bus verbunden. Die Slave-Einrichtungen 20a-c umfassen das eigentliche Medizingerät 26a-c bzw. medizinische System, beispielsweise Messgeräte wie Blutzucker- und Sauerstoffgehalt-Messgeräte, oder steuerbare operative Geräte wie Laser, Elektrocouter und Insufflatoren. Ferner umfassen die Slave-Einrichtungen 20a-c einen Schalter 24 zum Einstellen des Betriebszustands sowie eine I/O-Steuerung 28 a-c zur Steuerung der Eingaben und Ausgaben. Der Betriebszustand des Systems wird von dem Schalter 24 eingestellt, der wiederum mit einem in der Slave-Einrichtung 20a-c vorgesehenen CAN-Controller 22a-c bidirektional verbunden ist. Der CAN-Controller 22a-c kann so den Schalter 24 ansteuern, der wiederum Rückmeldungen hinsichtlich des Betriebszustandes an den CAN-Controller 22a-c liefern kann. Ferner ist der CAN-Controller 22a-c mit dem medizinischen System 26a-c bidirektional verbunden. Die in Figur 1 dargestellte Netzarchitektur weist bidirektionale Verbindungen auf, wobei auch vollständig oder teilweise unidirektionale Verbindungen verwendet werden können.

Durch die hier bidirektional dargestellte Verbindung kann der CAN-Controller 22a-c das medizinische System 26a-c mittels Signalen oder Steuerbefehlen ansteuern und dadurch Betriebsparameter des medizinischen Systems 26a-c ändern. In umgekehrter Richtung kann das medizinische System 26a-c seinen Betriebszustand, Betriebsparameter oder gemessene Werte an den CAN-Controller 22a-c liefern. Die Slave-Einrichtungen 20a-c umfassen ferner eine I/O-Steuerung 28a-c, die mit dem medizinischen System 26a-c bidirektional verbunden ist.

Zwischen dem medizinischen Gerät und der I/O-Steuerung werden Daten ausgetauscht, die das medizinische Gerät zur Fernsteuerung von außen vorsieht, beispielsweise Steuerkommandos und in der Anmeldephase auch Darstellungsobjekte bzw. Wiedergabeobjekte. Da die medizinischen Geräte bestimmen, welche Daten bereitstellt bzw. zur Manipulation oder Fernsteuerung zugelassen werden, liegt die gesamte das Gesamtsystem bestimmende Intelligenz in den Slave-Einrichtungen, die durch Ihre Anmeldung diese Intelligenz an das Gesamtsystem weitergeben. Dadurch verringert sich die Gefahr, dass die Zentralsteuerung, d.h. der Mastern, die Slaves mit für diese ungeeigneten Befehlen steuert. Gleichzeitig gibt der Master nur die Kontroll- und Steuerungsregeln der angeschlossenen medizinischen Geräte wieder, so dass die Gefahr einer fehlerhaften Programmierung der Master-Einrichtung stark verringert ist. Der Begriff "Master" ist in dieser Anmeldung als Zentralstelle zur zentralen Bedienung zu verstehen, wobei die Steuerungshierarchie durch die oben genannten eigenen Kompetenzen der Slave-Einrichtungen aufgebrochen ist. Mit anderen Worten kann erfindungsgemäß der Master lediglich als eine Bedienkonsole ohne Kompetenzen sein und eine MCI (Multi Control Interface, Mehrfach-Steuerungsschnittstelle) angesehen werden. Die Slave-Einrichtungen arbeiten erfindungsgemäß als Client, die Tasks oder Aufgaben von der Zentralstelle, d.h. der Master-Einrichtung erledigen lassen. Daher kann die Master-Einrichtung in diesem Sinne auch als Server bezeichnet werden.

Die I/O Steuerung betrifft den geräteinternen Datenverkehr, zwischen Hauptprozessor bzw. Controller, der das jeweilige medizinische Gerät steuert, und dem Controller, der diese Daten lediglich in das jeweilig genutzte Bus Format umsetzt. In dem dargestellten Beispiel ist der Controller ein CAN-Controller und das BUS-Format das CAN-Busformat.

Der CAN-Controller 22a-c umfasst ferner einen Eingang 30a-c und einen Ausgang 32a-c, wobei der Eingang 30c des CAN-Controllers einer Slave-Einrichtung 20c mit dem Ausgang 32b des CAN-Controllers einer weiteren Slave-Einrichtung 20b oder einer Master-Einrichtung 10 verbunden ist.

Diese serielle Anordnung erlaubt, im Gegensatz zu einer sternförmigen Vernetzung, eine spätere Erweiterung bzw. Ergänzung des Systems, ohne die Hardware ändern zu müssen, beispielsweise durch die limitierte Anzahl von Anschlüssen im Sternpunkt bei einer Stern-Topologie. Eine erfindungsgemäße Slave-Einrichtung kann mittels eines medizinischen Geräts vorgesehen werden, das mit einer Ein-/Ausgabevorrichtung ausgestattet ist. Ferner umfasst eine erfindungsgemäße Slave-Einrichtung einen Speicher, der mit der Ein-/Ausgabevorrichtung verbunden ist, Darstellungsobjekte speichern kann und diese an eine Zentralsteuerung ausgeben kann. Übliche Medizingeräte weisen zum Teil bereits eine Datenschnittstelle und einen Speicher auf, beispielsweise für die Gerätekennung, Produktversion, oder für Firmware bzw. Steuerungssoftware, so dass diese durch einfache Programmierung in eine erfindungsgemäße Slave-Einrichtung umgewandelt bzw. erweitert werden können. Diese Programmierung umfasst im Wesentlichen lediglich das Einspeichern der notwendigen Darstellungsobjekte und deren Verknüpfung bzw. Kategorisierung bezüglich der Funktionen des Medizingeräts. Die Darstellungsobjekte können beispielsweise in einem elektronischen Datenblatt zusammengefasst sein. Gemäß einer bevorzugten Ausführungsform werden die Daten eines vereinheitlichten Protokolls übertragen und verarbeitet, um die Kompatibilität mit dem jeweiligen Empfänger zu gewährleisten. Beispiele für diese Protokolle sind mediCbus ®, CAN Open, usw. Das Protokoll kann mit Software, Hardware, oder einer Kombination hiervon implementiert werden.

Wird eine SVG-Datei verwendet, so ist nur wenig Speicherplatz erforderlich. Eine solche Datei enthält alle Informationen über Darstellungs- bzw. Anzeigeobjekten, Anzeigeverhalten, d.h. Verknüpfung mit Funktionen oder Betriebsparametern und externen Dateien.

Die einzelnen Slave-Einrichtungen 20a-c sind aneinandergereiht, d.h. bilden eine "Daisy-chain"-Gruppierung. Die Master-Einrichtung 10 ist in der Figur 1 zwischen zwei Slave-Einrichtungen 20a-c geschaltet. Die Master-Einrichtung 10 kann an beliebiger Stelle im Ring, z.B. einem Ende der Reihenschaltung, angeordnet sein, die von den Slave-Einrichtungen 20a-c gebildet wird. Die Slave-Einrichtungen 20a-c und die Master-Einrichtung 10 können auch in einer geschlossenen Ring-Topologie vernetzt sein. Hierdurch ergibt sich eine N+1-Redundanz bei Unterbrechung der Reihenschaltung. Alternativ kann auch eine Stern-Topologie verwendet werden, wobei der Master vorzugsweise im Zentrum angeordnet ist und mit allen oder einem Teil der Slave-Einrichtungen 20a-c direkt verbunden ist. Hierzu kann die Master-Einrichtung 10 auch mehr als einen Eingang und mehr als einen Ausgang aufweisen. Die Anzahl der an eine Master-Einrichtung 10 anschließbaren Slave-Einrichtungen ist prinzipiell nicht begrenzt. Da jedoch bei bestimmten Übertragungsprotokollen die Master-Einrichtung und alle Slave-Einrichtungen eine eindeutige Identifikation haben müssen, die in jedem gesendeten Datenpaket enthalten ist, kann die maximale Anzahl der vernetzten Einrichtungen beschränkt sein, z.B. auf 128 Teilnehmer beim mediCbus wie auch beim CAN Open Protokoll.

Die Master-Einrichtung 10 umfasst einen CAN-Controller 12 und eine Stromversorgung 18, die zur Stromversorgung des gesamten Netzes, einschließlich der sich in den Geräten befindlichen, galvanisch getrennten, CAN Schnittstellen dient. Ferner versorgt die Stromversorgung alle weiteren Komponenten der Master-Einrichtung 10. Gemäß einer Ausführung der Erfindung versorgt die Stromversorgung die CAN-Controller 22a-c und/oder weitere Komponenten der Slave-Einrichtungen 20a-c über den Bus. Dadurch können die Netzgeräte der Slave-Einrichtungen 20a-c selbst und/oder die Netzgeräte für die CAN-Controller 22a-c der Slave-Einrichtungen 20a-c eingespart werden. Gemäß einer weiteren Ausführung der Erfindung werden nur Teile des Netzes versorgt, beispielsweise einige oder alle CAN-Controller.

Die elektrischen Eigenschaften des Einzelgerätes dürfen sich nicht verändern, beispielsweise durch Ableitströme usw., auch wenn im Vorfeld die Anzahl der Teilnehmer im Netz nicht bekannt ist. Daher ist eine galvanische Trennung unabdingbar. Wird nur ein einziges Netzteil im "Master" verwendet, statt einer Vielzahl von Mini- Netzteilen ( sog. DC/DC Wandlern) in jedem einzelnen Gerät, können wesentliche Kosten eingespart werden, unter Anderem wegen der notwendigen Zulassung. Bei Änderung der elektrischen Bedingungen durch Verbinden von Medizingeräten muss jeweils ein kompletter "elektrischer Sicherheitstest" entsprechend gültiger Normen, z.B. DIN EN ISO 60601-1, durchgeführt werden, der bei Verwendung eines einzigen Netzteils am Master eingespart werden kann.

Ferner umfasst die Master-Einrichtung 10 eine zentrale Mastereinheit 14, die mit dem CAN-Controller 12 gekoppelt ist. Die zentrale Mastereinheit 14 hat einen externen (optionalen) Zugang 16, mit dem die zentrale Mastereinheit 14 gewartet und aktualisiert werden kann. Ferner ist eine Diagnose der Master-Einrichtung 10 über den externen Zugang 16 möglich. Die zentrale Mastereinheit 14 setzt die vom CAN-Controller 12 empfangenen Daten in anzeigbare Daten, beispielsweise VGA-Graphikdaten um. Diese Daten werden an eine angeschlossene Touchscreen-Station 40 geliefert und dort angezeigt. Bei Berühren der Touch-screen-Station 40 entstehen Daten, die an die zentrale Mastereinheit 14 gesendet und dort verarbeitet werden. Entsprechen die von der Touchscreen-Station 40 gesendeten Daten einer Position des Bildschirms, auf der ein Betätigungselement einer bestimmten Slave-Einrichtung 20b vorgesehen und/oder dargestellt ist, veranlasst die zentrale Mastereinheit 14 den CAN-Controller 12 der Master-Einrichtung 10, entsprechende Steuerdaten zu senden, die mittels einer darin enthaltenen Identifikation der bestimmten Slave-Einrichtung 20b zugeordnet werden. Diese Slave-Einrichtung 20b setzt den Steuerbefehl um und ändert den jeweiligen Betriebsparameter, der dem Betätigungselement zugeordnet ist. Die zentrale Mastereinheit 14 umfasst im wesentlichen PC-Komponenten, d.h. einen Arbeitsspeicher, einen Massenspeicher, ein Motherboard mit einer CPU, eine Graphikkarte und eine I/O-Schnittstelle, wobei diese Komponenten über eine geeignete Busstruktur miteinander verbunden sind. Die I/O-Schnittstelle ist eingerichtet, mit dem CAN-Controller 12 sicher und mit einer geringen Latenzzeit zu kommunizieren und weist ferner eine Verbindung zu einem externen Zugang auf, der beispielsweise als USB-Port, Ethernet-Anschluss oder parallele bzw. serielle Schnittstelle ausgebildet ist. Die zentrale Master-Einheit kann mit einem Monitor verbunden werden, um die Darstellungsdaten anzuzeigen. Ferner kann ein Sprachausgabe zur Ausgabe der Darstellungsdaten verwendet werden. Der Benutzer hat eine mit der zentralen Master-Einheit verbundene Maus, Fernsteuerung, Touchscreen (der auch der Anzeige dient), ein Spracheingabe-Mikrofon oder ähnliches zur Eingabe und Betätigung zur Verfügung.

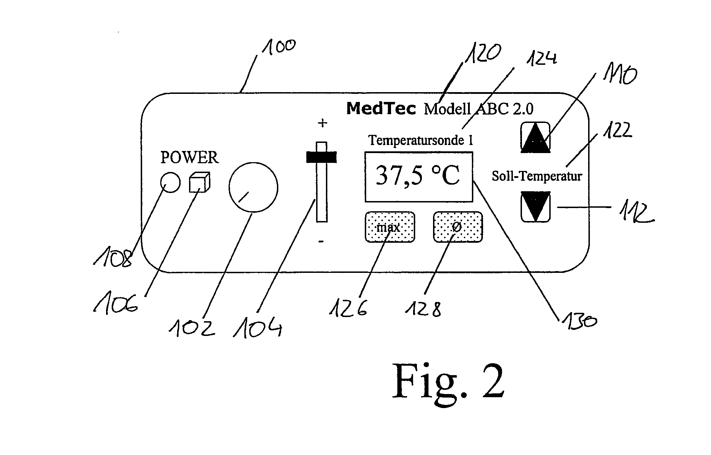

Die Figur 2 zeigt ein Beispiel eines mittels Darstellungsobjekte graphisch dargestellte Slave-Einrichtung 20a-c beziehungsweise im Wesentlichen das Bedienfeld des zugehörigen medizinischen Systems 26a-c. Die Darstellungsobjekte umfassen Textelemente 120 - 128, die das medizinische Gerät beziehungsweise entsprechende Funktionen näher beschreiben. Die Textelemente sind durch den Textinhalt, die Größe, Darstellung (fett/kursiv...), Schriftart, Farbe und Position definiert. Ferner sind Wiedergabeobjekte 102 - 108 vorgesehen, die aus einfachen geometrischen Formen bestehen. Beispielsweise Linien sind durch Strichstärke, Anfangs- und Endposition definiert. Statt einer pixelbasierten Darstellung genügt daher die Übermittlung von bestimmenden Parametern, beispielsweise geometrische Form, Größe, Position, Farbe, Linienstärke, um eine eindeutige Darstellung zu erreichen. SVG-Graphiken erlauben eine parameterhafte Beschreibung solcher Formen. Ferner können HTML- oder XML-Beschreibungen verwendet werden. Gegenüber der photographischen Darstellung hat die Darstellung durch SVG den Vorteil der geringeren zu übertragenden Datenmenge, insbesondere bei der Übertragung komprimierter SVG-Dateien, die an der Master-Einrichtung dekomprimiert werden. Sind einige Parameter eines Darstellungsobjekts nicht gespeichert, so können Default-Werte verwendet werden, beispielsweise wird bei mangelnder Farbangabe schwarz verwendet. Zudem können Default-Werte für Größe, Linienstärke, Schriftart usw. gespeichert werden.

Die Darstellung umfasst permanente Elemente 100, 110, 112, 120, 122, 124, die nur einmal übertragen werden müssen, z.B. während der Anmeldephase des Gerätes an das System, sowie sich ändernde Elemente 102 - 108, 126 - 130, die regelmäßig aktualisiert werden müssen. Beispielsweise die Anzeige 130 zeigt Werte an, die regelmäßig von der Slave-Einrichtung gesendet werden bzw. von dort abgerufen werden. Hier muss nur der numerische Wert übertragen werden, die Schriftart, Position und Schriftgröße und Umrandung bleiben unverändert. Alternativ kann das Objekt wiederholt übertragen werden, welches die Zahlenanzeige vollständig definiert (inklusive der Schriftart, Schriftgröße usw.), und der Rand kann nur einmal übertragen werden, da er während des gesamten Betriebs unverändert bleibt. Die Tasten 126, 128 erlauben eine Änderung des Anzeigemodus (Maximaltemperatur/Durchschnittstemperatur), wobei die Auswahl und Berechnung des angezeigten Wertes von der Slave-Einrichtung oder auch von der Master-Einrichtung durchgeführt wird. Ferner ist die Speicherung eines Berechungsalgorithmus oder Formel innerhalb des Darstellungsobjekts möglich, beispielsweise in Form eines Scripts, das es der Master-Einrichtung erlaubt, die Berechnung vorzunehmen. Das Script bildet die Logik innerhalb der Slave-Einrichtung ab, die im Falle der direkten Bedienung den jeweiligen Anzeigewert erstellt.

Die Elemente 108 und 106 sind Elemente, die den Betriebszustand wiedergeben. Das Element 106 zeigt einen isometrisch dargestellten Druckschalter, der abhängig vom Betriebszustand eingedrückt oder ausgefahren dargestellt ist. Das Element 108 ist eine Status-LED, deren Farbe den Betriebszustand anzeigt. Wird der Druckschalter 106 betätigt, ändert sich dessen Darstellung. Ebenso ändert sich die Darstellung des Drehreglers 102 und Schiebereglers 104 bei Betätigung. Die Betätigungselemente 110, 112 ändern hingegen ihre graphische Darstellung bei Betätigung nicht. Gleichwohl führt eine Betätigung zu einer Änderung der Betriebsparameter der Slave-Einrichtung. Die Tasten 126 und 128 zeigen ferner ein Beispiel einer Texturierung, die ebenfalls in dem Darstellungsobjekt gespeichert ist.

Im Allgemeinen umfassen die Darstellungsobjekte reine graphische Darstellungen 120, 100, die sich während des Betriebs nicht ändern und die das Äußere der Slave-Einrichtung wiedergeben um so eine intuitive Zuordnung durch den Benutzer zu erlauben. Ferner umfassen die Darstellungsobjekte Ausgaben 130 der Slave-Einrichtung, die regelmäßig aktualisiert dargestellt werden. Betätigungselemente können ihr Äußeres bei Betätigung verändern, beispielsweise der Druckknopf 106 oder die Regler 102, 104, oder ihr Erscheinungsbild bei Betätigung nicht ändern wie die Drucktasten 110, 112. Die Betätigung eines Betätigungselements, welches sich bei Betätigung nicht ändert, kann optisch an anderer Stelle, beispielsweise im Umfeld des Betätigungselements, die Betätigung angezeigt werden. Die Betätigung eines Betätigungselements kann ferner durch ein akustisches Signal, beispielsweise ein Klicken, angegeben werden. Das akustische Signal kann auf die Funktion der Betätigungselemente abgestimmt sein. Werden akustische Signale verwendet, so sind diese in der Slave-Einrichtung in einem oder als Darstellungsobjekt gespeichert, beispielsweise als WAV-, MP3- oder MIDI-Datei. Das Darstellungsobjekt kann statt der Audio-Datei auch einen Link auf die Audio-Datei enthalten, die separat gesendet werden kann. Die Master-Einrichtung umfasst vorzugsweise eine Ausgabeeinheit für akustische Signale, beispielsweise eine Soundkarte und einen Lautsprecher. Naturgemäß brauchen akustische Signale keine Positionsangabe, wobei diese bei Wiedergabeobjekten und Betätigungsobjekten notwendigerweise zur Beschreibung gehört.

Sind mehrere Slave-Einrichtungen angeschlossen, so werden alle von der Master-Einrichtung dargestellt. Vorzugsweise wird nur eine ausgewählte Slave-Einrichtung groß dargestellt, wobei die anderen Slave-Einrichtungen in kleinem Format dargestellt werden, beispielsweise als Icon, Thumbnail, oder ähnliches. Gemäß einer Ausführung der Erfindung lässt sich nur die ausgewählte bzw. groß dargestellte Slave-Einrichtung bedienen, während die Bedienelemente bzw. Betätigungselemente der klein dargestellten Slave-Einrichtungen nicht betätigbar sind. Dadurch werden Bedienfehler vermieden und die ausgewählte Slave-Einrichtung wird übersichtlich auf einer großen Fläche dargestellt. Die Slave-Einrichtungen werden ausgewählt, indem sie beispielsweise auf einem Touch-Screen berührt, per Sprachwahl genannt oder mittels einer Computermaus oder Fernbedienung aufgerufen werden. Alternativ werden Gruppen von Slave-Einrichtungen ausgewählt, dargestellt und aktiviert. Vorzugsweise werden nur Slave-Einrichtungen dargestellt, die momentan mit der Master-Einrichtung verbunden sind und von der Master-Einrichtung als kompatibel erkannt wurden. Ferner können auch Slave-Einrichtungen von der Master-Einrichtung ausgewählt oder auffallend dargestellt werden, deren Betriebsparameter kritisch sind oder die einen Alarm melden.

Die Master-Einrichtung speichert Informationen über Slave-Einrichtungen in einer darstellbaren und auswählbaren Liste. Diese Informationen betreffen die CAN-ID des CAN-Standards, den Typ, die Modellbezeichnung, einen Index, der einer Geräteadresse entspricht, den Hersteller und die Kategorie. Beispielsweise können so Informationen über Saug-/ Spülgeräte, Insufflatoren, Lichtquellen, Kameras, OP Liegen usw. gespeichert sein und später übertragen werden.

Vorzugsweise wird zur Vernetzung ein CAN-Bus verwendet, da dieser Schnittstellenstandard sehr verlässlich ist, eine geringe Fehlerrate aufweist, und mittels einer kostengünstigen Zweidrahtleitung erstellt werden kann. Zudem sind geeignete Busmodule und Chipsätze leicht erhältlich. Ein Pegelwandlermodul, das beispielsweise dem mediCbus® Standard entspricht, mit den erforderlichen Anschlüssen/Steckern, einer galvanischer Trennung und automatischer Abschlusskennung, wird von der Anmelderin angeboten.

Gemäß einer vorteilhaften Ausführung setzt ein CANOpen Standard auf dem CAN-Bus auf. Vorzugweise wird der CAN-2.0B- und/oder der CAN-2.0A-Standard zur Übertragung verwendet. Gemäß einer vorteilhaften Ausführung der Erfindung wird ermittelt, beispielsweise von der Master-Einrichtung, ob angeschlossene Slave-Einrichtungen dem geforderten Standard ( z.B. mediCbus ®, CANOpen ) entsprechen. Nicht konforme Slave-Einrichtungen werden dann von der Kommunikation ausgeschlossen. Die Darstellungsobjekte werden vorzugsweise mittels eines elektronischen Datenblatts beziehungsweise EDS-Objekts gemäß dem CANOpen-Standard übermittelt. EDS steht hierbei für Electronic Data Sheet und wird im mediCbus ®-Standard verwendet.

Vorzugsweise folgen die gespeicherten Darstellungsobjekte einem bestimmten Format. Wenn zur Speicherung der Darstellungsobjekte beispielsweise eine SVG-Datei verwendet wird, so muss die Beschreibung, welche die Darstellungsobjekte widerspiegelt, dem SVG-Format entsprechen. Zusätzlich können folgende Formatvorgaben bestehen:
- Darstellungsobjekte, die auch als Tags bezeichnet werden, die SVG-Elemente aufweisen, werden durch eckige Klammern (< >) eingeschlossen.
- Die SVG-Datei ist zeilenweise aufgebaut, d.h. jede Zeile beginnt mit "<", endet mit ">" und weist sonst keine eckigen Klammern auf.
- Eine Zeile ist maximal 4096 Zeichen lang.
- Referenzen und Links haben keine Pfadangabe. URLs sind als Referenz ausgeschlossen.

Der SVG-Standard gruppiert SVG-Objekte in Gruppen. Daher sind vier Gruppen zu verwenden:
1.) SVG-Tags, d.h. Elemente eines Darstellungsobjekts, die als Ganzes übertragen werden und in einer Gruppe "Bedienfeld" zusammengefasst. Diese Gruppe umfasst optische Angaben über das Äußere der Slave-Einrichtung und betrifft optische Merkmale, die sich während des Betriebs und bei Betätigung nicht ändern, beispielsweise der Umriss des Bedienfelds und Aufschriften.
2.) SVG-Tags, die sich während dem Betrieb ändern und die Betätigung betreffen, beispielsweise ein Tastendruck. Diese Tags betreffen Gerätefunktionen, deren Änderung aufgrund von Interaktion an der Slave-Einrichtung von dieser an die Master-Einrichtung übertragen werden und Betriebsparameter der Slave-Einrichtung ändern. Gemäß einer Ausführung der Erfindung haben Eingaben direkt an der Master-Einrichtung, d.h. an dem zentralen Fernbedienungsterminal dieselbe Priorität. Der Datenfluss ist somit bidirektional. Master-Einrichtung und Slave-Einrichtung befinden sich permanent in zyklischem Datenaustausch . Die Master-Einrichtung fragt zyklisch alle beteiligten "Slaves" ab, d.h. betreibt "polling". Nur im Falle einer Dateneingabe wird eine Slave-Einrichtung von der Master-Einrichtung direkt adressiert bzw. angesprochen. Die Slave-Einrichtungen selbst senden aktiv nur im Falle einer Fehlermeldung mit hoher Priorität direkt an die Master-Einrichtung. Durch diese Änderung wird ferner die Darstellung der Slave-Einrichtung an der Master-Einrichtung verändert. In der SVG-Datei wird jeder Betriebsparameter durch einen solchen Tag dargestellt.
3.) SVG-Tags, die sich während dem Betrieb ändern, und die Betriebsparameter betreffen, die nicht durch direkt Interaktion seitens des Benutzers an der Slave-Einrichtung angezeigt werden, beispielsweise die Betriebsmodusanzeige, Statusanzeige usw. Diese Tags dienen der Anzeige von Betriebsparametern und Betriebsfunktionen an der Master-Einrichtung in Form von Wiedergabeobjekten.
4.) SVG-Tags, die sich während dem Betrieb ändern, und die Betriebsparameter betreffen, die nicht durch direkt Interaktion seitens des Benutzers an der Slave-Einrichtung angezeigt werden, beispielsweise Messwerte. Diese Tags dienen der text-, symbol-und ziffernbasierten Anzeige an der Mastereinrichtung, insbesondere die Anzeige von numerischen Daten.

Vorzugsweise folgt die Datenkommunikation von der Master-Einrichtung zu der Slave-Einrichtung den selben Regeln wie umgekehrt. Ferner ist eine Kommunikation zwischen Slave-Einrichtungen möglich. Das jeweils geltende Protokoll darf jedoch nicht verletzt werden. Das heisst, dass die Kommunikation der übrigen Teilnehmer nicht gestört werden darf.

Zur Bestimmung, ob eine Slave-Einrichtung erfindungskonform ist und nicht von der Kommunikation ausgeschlossen bzw. geblockt wird, kann das Format der gespeicherten SVG-Datei überprüft werden. Falls keine SVG-Datei vorliegt oder die vorliegende SVG-Datei eine der oben genannten Formatangaben verletzt, wird die Slave-Einrichtung als nicht kompatibel eingestuft und von der Kommunikation ausgeschlossen, geblockt oder deaktiviert. Alternativ erzeugt die Master-Einrichtung in diesem Fall eine Fehlermeldung. Vorzugsweise wird die Auswertung der SVG-Datei von der Master-Einrichtung vorgenommen, die auch gegebenenfalls die betreffende Slave-Einrichtung von der Kommunikation ausschließt, blockt oder deaktiviert.

Der CANOpen-Standard kann auf die Master/Slave-Kommunikation beschränkt sein. Zur Vermeidung von Fehlfunktionen kann das NMT-Protokoll des CANOpen-Standards für alle anschließbaren Master- und Slave-Einrichtungen einem Standard unterliegen

Die physikalische Verbindung wird beispielsweise über eine Zweidrahtverbindung mit RJ45-Steckern hergestellt, die eine Pinbelegung aufweisen, die auch bei fälschlicherweise eingesteckten ISDN- oder Ethernet-Anschlüssen zu keinem Kurzschluss im Gesamtnetz führt. In einer bevorzugten Ausführung der Erfindung ist die physikalische Datenverbindung zusammen mit einer Versorgungsverbindung ausgeführt, so dass das Einstecken der Verbindung zu einer Datenverbindung und zu einer Stromversorgungsverbindung führt. Vorzugsweise ist der Bus mit Abschlusswiderständen terminiert, um Reflexionen an den Bus-Enden zu vermeiden.

Vorzugsweise umfassen die von den Master- und Slave-Einrichtungen gesendeten Signale eine Kennung, mit der die Kompatibilität zu einem festgelegten Standard nachgewiesen wird. Melden sich verschiedene Slave-Einrichtungen bei der Master-Einrichtung an, so kann diese aufgrund dieser Kennung entscheiden, ob die jeweilige Slave-Einrichtung zugelassen wird. Dadurch können nicht kompatible Geräte, die den Betrieb des gesamten Netzes stören können, von der Kommunikation ausgeschlossen werden. Alternativ oder zusätzlich ist die Master-Einrichtung eingerichtet, zu erkennen, ob eine angeschlossene Slave-Einrichtung ein Darstellungsobjekt speichert. Liegt kein Darstellungsobjekt vor, so kann die Master-Einrichtung daraus schließen, dass die entsprechende Slave-Einrichtung keine erfindungsgemäße Slave-Einrichtung und somit inkompatibel zu dem erfindungsgemäßen Verfahren ist und dieses von der Kommunikation ausschließen oder auf andere Weise blockieren. Ferner sind die Slave-Einrichtungen vorzugsweise eingerichtet, direkt miteinander Nachrichten auszutauschen. Die durch direkten Nachrichtenaustausch übertragenen Informationen werden von der Master-Einrichtung nur mittelbar übernommen, beispielsweise protokolliert, jedoch nicht ausgewertet.

Die Erfindung wird hier anhand einer beispielhaften CAN-Bus-Vernetzung dargestellt, wobei auch andere Datenübertragungsstandards möglich sind. Die Vernetzung basiert in dem hier beschrieben Beispiel auf seriellen Leitungen, beispielsweise Zweidraht-Leitungen, wobei auch parallele Leitungen, Funkverbindungen oder IR-Übertragungsstrecken zur Verbindung im Netz oder in Teilen des Netzes denkbar sind. Ferner kann die Erfindung in anderen Hierarchiestrukuren als Master/Slave-Strukturen umgesetzt werden, wobei dann an die Stelle der erfindungsgemäßen Slave-Einrichtungen medizinische Geräte treten, die Daten senden können und die einen Speicher mit mindestens einem Darstellungsobjekt umfassen. Anstelle einer Master-Einrichtung kann eine Steuereinrichtung verwendet werden, die Darstellungsobjekte anzeigen kann. Vorzugsweise umfasst eine solche Steuereinrichtung Eingabevorrichtungen, um im Falle eines vom medizinischen Gerät gesendeten und von der Steuereinrichtung dargestellten Betätigungselementes die Benutzereingaben zu erfassen und in Signale oder Befehle umzuwandeln, die an das medizinische Gerät geschickt werden. Erfindungsgemäß umfassen die von der Steuereinrichtung oder Master-Einrichtung gesendeten Signale oder Datenpakete eine Identifikation zur eindeutigen Zuordnung der übertragenen Information zum entsprechenden medizinischen Gerät. In gleicher Weise umfassen die von dem medizinischen Gerät bzw. von der Slave-Einrichtung gesendeten Signale oder Datenpakete eine Identifikation zur eindeutigen Zuordnung zu einem Adressaten, wobei hierdurch ein anderes medizinisches Gerät oder die angeschlossene Steuereinrichtung als Empfänger angegeben werden kann.

## Patentansprüche

1. Verfahren zum Steuern mindestens einer Slave-Einrichtung (20a-c), die als medizinisches Gerät ausgeführt ist, mittels einer Master-Einrichtung (10), die mit der Slave-Einrichtung (20a-c) verbunden ist, **gekennzeichnet durch** die Schritte:
Vorsehen einer Slave-Einrichtung (20a-c) als medizinisches Gerät, in dem mindestens ein Darstellungsobjekt gespeichert ist, wobei das mindestens eine Darstellungsobjekt mindestens ein Wiedergabeobjekt (100, 120, 124, 130) mit wahrnehmbaren Eigenschaften des medizinischen Geräts umfasst, und
Übertragen des mindestens einen Darstellungsobjekts der als medizinisches Gerät ausgeführten Slave-Einrichtung (20a-c) an die Master-Einrichtung (10), die die wahrnehmbaren Eigenschaften des medizinischen Geräts darstellt.

2. Verfahren nach Anspruch 1, wobei das mindestens eine medizinische Gerät (20a-c) mit der Master-Einrichtung (10) über ein CAN-Busprotokoll verbunden ist und das mindestens eine Darstellungsobjekt mittels des CAN-Busprotokolls übertragen wird.

3. Verfahren nach Anspruch 1 oder 2, wobei das mindestens eine Darstellungsobjekt mindestens ein Betätigungselement (102-106, 110, 112) umfasst, das sich auf Betriebsparameter der Slave-Einrichtung (20a-c) bezieht.

4. Verfahren nach einem der vorangehenden Ansprüchen , das ferner den Schritt des visuellen Darstellens des mindestens einen Darstellungsobjekts durch die Master-Einrichtung (10) umfasst.

5. Verfahren nach einem der vorangehenden Ansprüchen, wobei das mindestens eine Darstellungsobjekt mindestens ein Betätigungselement (102-106, 110, 112) umfasst, wobei bei Betätigung des mindestens einen Betätigungselements (102-106, 110, 112) die Master-Einrichtung (10) Eingabedaten erzeugt, die die Betätigung des Betätigungselements wiedergeben, wobei das Verfahren ferner den Schritt umfasst: Kommunizieren der Eingabedaten an die Slave-Einrichtung (20a-c).

6. Verfahren nach Anspruch 5, wobei das Verfahren ferner den Schritt umfasst: Einstellen von Betriebsparametern der Slave-Einrichtung (20a-c) gemäß der von der Master-Einrichtung (10) erzeugten Eingabedaten durch die Slave-Einrichtung (20a-c).

7. Verfahren nach einem der Ansprüche 3 - 6, wobei alle Betriebsparameter eines Bedienfelds (102 - 130) der Slave-Einrichtung (20a-c) durch das mindestens eine Betätigungselement (102-106, 110, 112) einstellbar sind, und die Darstellungsobjekte Daten umfassen, mit denen die Master-Einrichtung (10) das vollständige Bedienfeld (102 - 130) der Slave-Einrichtung (20a-c) mit den entsprechenden Betätigungs- und Anzeige-Elementen (102-106, 110, 112) der Slave-Einrichtung (20a-c) nachbilden oder darstellen kann.

8. Slave-Einrichtung, die als medizinisches Gerät ausgeführt ist, und die einen Datenspeicher und eine Sendevorrichtung (32a-c) umfasst, wobei die Sendevorrichtung eingerichtet ist, Daten an eine damit verbindbare Master-Einrichtung (10) zu senden, **dadurch gekennzeichnet, dass** in dem Speicher mindestens ein Darstellungsobjekt gespeichert ist, wobei das mindestens eine Darstellungsobjekt mindestens ein Wiedergabeobjekt (100, 120, 124, 130) mit wahrnehmbaren Eigenschaften des medizinischen Geräts umfasst, und die Sendevorrichtung (32a-c) eingerichtet ist, das mindestens eine Darstellungsobjekt an die Master-Einrichtung (10) zu senden.

9. Slave-Einrichtung nach Anspruch 8, wobei die Sendevorrichtung einen CAN-Controller (22a-c) umfasst, über das medizinische Gerät die Daten überträgt.

10. Slave-Einrichtung nach Anspruch 8 oder 9, die ferner eine Empfangsvorrichtung umfasst, die eingerichtet ist, von der Master-Einrichtung (10) Steuersignale zu empfangen, die zur Steuerung mit Betriebsparametern der Slave-Einrichtung (20a-c) vorgesehen sind, wobei das mindestens eine in dem Speicher der Slave-Einrichtung (20a-c) gespeicherte Darstellungsobjekt mindestens ein Betätigungselement (102-106, 110, 112) umfasst, das sich auf mindestens einen Betriebsparameter der Slave-Einrichtung (20a-c) bezieht und die Slave-Einrichtung (20a-c) eingerichtet ist, diesen mindestens einen Betriebsparameter bei Empfang eines darauf bezogenen Steuersignals einzustellen

11. Master-Einrichtung mit einer Empfangseinrichtung (19), die eingerichtet ist, Daten von einer damit verbindbaren, als medizinisches Gerät ausgeführten Slave-Einrichtung (20a-c) zu empfangen, **dadurch gekennzeichnet, dass** die Empfangsvorrichtung (19) eingerichtet ist, ein Darstellungsobjekt, das mindestens ein Wiedergabeobjekt (100, 120, 124, 130) mit wahrnehmbaren Eigenschaften des medizinischen Geräts umfasst, zu empfangen, wobei das Darstellungsobjekt in der Slave-Einrichtung (20a-c) gespeichert ist, von dieser gesendet wird und die Mastereinrichtung eingerichtet ist, die wahrnehmbaren Eigenschaften des medizinischen Geräts darzustellen.

12. Master-Einrichtung nach Anspruch 11, die ferner einen CAN-Controller (12) umfasst, der eingerichtet ist, mit dem medizinischen Gerät zur Datenübertragung mittels eines CAN-Busprotokolls verbunden zu werden.

13. Master-Einrichtung nach Anspruch 11 oder 12, die eine Anzeigevorrichtung (40) zur Anzeige der Darstellung des Darstellungsobjekts umfasst.

14. Master-Einrichtung nach einem der Ansprüche 11 - 13, wobei das Darstellungsobjekt mindestens ein Betätigungselement (102-106, 110, 112) umfasst, das sich auf mindestens einen Betriebsparameter der Slave-Einrichtung (20a-c) bezieht und die Master-Einrichtung (10) eine Eingabevorrichtung (40) umfasst, die bei Betätigung des mindestens einen Betätigungselements (102-106, 110, 112) ein Steuersignal erzeugt, das sich auf den mindestens einen Betriebsparameter der Slave-Einrichtung (20a-c) bezieht.

15. Steuerungssystem mit mindestens einer Slave-Einrichtung (20a-c) nach einem der Ansprüche 8-10 und einer Master-Einrichtung (10) nach einem der Ansprüche 11-14 und einem Netz, das diese verbindet, **dadurch gekennzeichnet, dass** die zwischen den Slave-Einrichtungen (20a-c) und der Master-Einrichtung (10) übertragenen Signale Signalelemente umfassen, die eindeutig einer der Slave-Einrichtungen (20a-c) oder der Master-Einrichtung (10) zugeordnet sind.

16. Steuerungssystem nach Anspruch 15, wobei die Master-Einrichtung (10) eingerichtet ist, Slave-Einrichtungen (20a-c) gemäß einem der Ansprüche 8-10 von Slave-Einrichtungen zu unterscheiden, die keinen Speicher mit Darstellungsobjekten aufweisen, und diese Slave-Einrichtungen, die keinen Speicher mit Darstellungsobjekten aufweisen, von der Kommunikation über das Netz auszuschließen.
